(19) Europäisches Patentamt
European Patent Office
Office européen des brevets

(11) **EP 4 456 181 A1**

(12) **EUROPEAN PATENT APPLICATION**

(43) Date of publication:
**30.10.2024 Bulletin 2024/44**

(21) Application number: **24172114.1**

(22) Date of filing: **24.04.2024**

(51) International Patent Classification (IPC):
**H01M 4/134** (2010.01)  **H01M 4/38** (2006.01)
**H01M 4/62** (2006.01)  **H01M 10/052** (2010.01)
**H01M 4/1395** (2010.01)  **H01M 4/02** (2006.01)

(52) Cooperative Patent Classification (CPC):
**H01M 4/624; H01M 4/134; H01M 4/1395;**
**H01M 4/382; H01M 4/625; H01M 4/626;**
**H01M 10/052;** H01M 2004/021; H01M 2220/30;
Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.04.2023  CN 202310451814**

(71) Applicant: **Ningde Amperex Technology Ltd.**
**Ningde City, Fujian 352100 (CN)**

(72) Inventors:
• **LIN, Xiaoping**
**Ningde City, Fujian Province, People s Republic**
**of**
**China, 352100 (CN)**
• **XIE, Yuansen**
**Ningde City, Fujian Province, People s Republic**
**of**
**China, 352100 (CN)**

(74) Representative: **Icosa**
**83 avenue Denfert-Rochereau**
**75014 Paris (FR)**

(54) **SECONDARY BATTERY AND ELECTRONIC DEVICE**

(57)    A secondary battery includes a negative electrode plate and a separator. The negative electrode plate includes a three-dimensional framework. The three-dimensional framework includes a first framework layer and a second framework layer. The first framework layer includes one-dimensional conductive fibers. The second framework layer includes a zero-dimensional material, a one-dimensional material, and a two-dimensional material. The zero-dimensional material is a lithiophilic material. By adjusting and controlling the thicknesses of the three-dimensional framework, the first framework layer, and the second framework layer, the mass percent of the zero-dimensional material, and the mass ratio between the one-dimensional material and the two-dimensional material to fall within the ranges specified herein, a lithiophilic gradient is favorably constructed in the three-dimensional framework, so as to enable lithium metal to enter the interior of the three-dimensional framework and deposit from bottom upward, thereby improving the Coulombic efficiency and cycle performance of the secondary battery.

FIG. 1

## Description

### TECHNICAL FIELD

This application relates to the field of electrochemical technology, and in particular, to a secondary battery and an electronic device.

### BACKGROUND

Secondary batteries such as a lithium-ion battery are widely used in the field of consumer electronics by virtue of advantages such as a high energy density, a high operating voltage, a low self-discharge rate, a small size, and a light weight. Among all metal elements, lithium metal is a metal with the smallest relative atomic mass (6.94) and the lowest standard electrode potential (-3.045 V). With a theoretical specific capacity of up to 3860 mAh/g, the lithium metal is one of the metals with the highest gravimetric specific energy discovered so far. For a lithium metal battery containing a negative electrode in which the lithium metal is introduced, the energy density and operating voltage of the lithium metal battery can be improved by the use of some high-energy-density positive electrode materials (such as lithium cobalt oxide, lithium iron phosphate, lithium manganese oxide, lithium nickel cobalt manganese oxide, or lithium nickel cobalt aluminum oxide). However, the lithium metal keeps depositing during charging, thereby giving rise to lithium dendrites and dead lithium. The lithium metal also keeps expanding and shrinking during charging and discharging, thereby resulting in the peeling and fragmentation of a solid electrolyte interface (SEI) film, and in turn, impairing the Coulombic efficiency and cycle performance of the lithium metal battery.

### SUMMARY

An objective of this application is to provide a secondary battery and an electronic device to improve the Coulombic efficiency and cycle performance of the secondary battery. Specific technical solutions are as follows:
It is hereby noted that in the following description, this application is construed by using a lithium metal battery as an example of the secondary battery, but the secondary battery of this application is not limited to the lithium metal battery.

A first aspect of this application provides a secondary battery. The secondary battery includes a negative electrode plate and a separator. The negative electrode plate includes a three-dimensional framework. The three-dimensional framework includes a first framework layer and a second framework layer. The first framework layer includes one-dimensional conductive fibers. The second framework layer includes a zero-dimensional material, a one-dimensional material, and a two-dimensional material. The zero-dimensional material is a lithiophilic material. A thickness of the three-dimensional framework is 10 $\mu$m to 200 $\mu$m. A thickness of the first framework layer is 0 $\mu$m to 10 $\mu$m. A thickness of the second framework layer is 10 $\mu$m to 200 $\mu$m. Preferably, the thickness of the three-dimensional framework is 30 $\mu$m to 180 $\mu$m, and the thickness of the second framework layer is 30 $\mu$m to 80 $\mu$m. Based on a mass of the second framework layer, a mass percent of the zero-dimensional material is 1 % to 30%. Preferably, the mass percent of the zero-dimensional material is 1 % to 10%. A mass ratio between the one-dimensional material and the two-dimensional material is 1: 7 to 20: 1. By controlling the thickness of the three-dimensional framework, the thickness of the first framework layer, the thickness of the second framework layer, the mass percent of the zero-dimensional material, and the mass ratio between the one-dimensional material and the two-dimensional material to fall within the above ranges, a lithiophilic gradient is favorably constructed in the three-dimensional framework, so as to enable lithium metal to enter the interior of the three-dimensional framework and deposit from bottom upward, thereby reducing lithium dendrites and dead lithium generated, and improving the Coulombic efficiency and cycle performance of the secondary battery. In addition, the lithium metal deposited in the pores of the three-dimensional framework can suppress the volume expansion of the lithium metal, thereby improving the expansion resistance of the secondary battery.

In some embodiments of this application, the negative electrode plate includes a metallic lithium layer. The second framework layer is located between the first framework layer and the metallic lithium layer. A thickness of the metallic lithium layer is 1 $\mu$m to 100 $\mu$m. Preferably, the thickness of the metallic lithium layer is 5 $\mu$m to 50 $\mu$m. By introducing the metallic lithium layer into the negative electrode plate and controlling the thickness of the metallic lithium layer to fall within the range specified herein, this application can compensate for the loss of lithium caused by irreversible reactions in the secondary battery during an initial charge, thereby improving the cycle performance of the secondary battery.

In some embodiments of this application, a particle diameter of the zero-dimensional material is 0.1 $\mu$m to 5 $\mu$m, and preferably 0.1 $\mu$m to 1 $\mu$m. By controlling the particle diameter of the zero-dimensional material to fall within the range specified herein, this application favorably induces the lithium metal to deposit, thereby improving the Coulombic efficiency and cycle performance of the secondary battery.

In some embodiments of this application, a diameter of the one-dimensional material is 1 nm to 2000 nm, and a length-to-diameter ratio of the one-dimensional material is 0.1 to 20000. Preferably, the diameter of the one-dimensional material is 1 nm to 300 nm, and the length-to-diameter ratio of the one-dimensional material is 0.67 to 20000. More preferably, the diameter of the one-dimensional material is 1 nm to 50 nm, and the length-to-diameter ratio of the one-dimensional material is 5000 to 20000. By controlling the diameter and the length-to-diameter ratio of the one-dimensional material to fall within the range specified herein, the electron conduction is facilitated in the three-dimensional framework, thereby improving the Coulombic efficiency and cycle performance of the secondary battery.

In some embodiments of this application, a particle diameter of the zero-dimensional material is 0.1 $\mu$m to 5 $\mu$m; a diameter of the one-dimensional material is 0.001 $\mu$m to 2 $\mu$m, and the length-to-diameter ratio of the one-dimensional material is 0.1 to 20000. Preferably, the particle diameter of the zero-dimensional material is 0.1 $\mu$m to 1 $\mu$m; the diameter of the one-dimensional material is 0.001 $\mu$m to 0.3 $\mu$m, and the length-to-diameter ratio of the one-dimensional material is 0.67 to 20000. By controlling the particle diameter of the zero-dimensional material as well as the diameter and length-to-diameter ratio of the one-dimensional material to fall within the above ranges, the lithium metal is favorably induced to deposit, and the electron conduction is facilitated in the three-dimensional framework, thereby improving the Coulombic efficiency and cycle performance of the secondary battery.

In some embodiments of this application, the two-dimensional material includes titanium, carbon, and a surface group. The surface group includes at least one of -F, -O, or -OH. By selecting the above two-dimensional material, the lithium ion flow is favorably homogenized, thereby improving the homogeneity of the lithium metal deposition, and improving the Coulombic efficiency and cycle performance of the secondary battery.

In some embodiments of this application, an electrical conductivity a of the one-dimensional material satisfies: $a \geq 1 \times 10^{-6}$ S/cm, and an electrical conductivity b of the two-dimensional material satisfies: $b \geq 2$ S/cm, and b > a. When the electrical conductivity of the one-dimensional material and the two-dimensional material falls within the above range, the one-dimensional material and the two-dimensional material are of good electron-conducting properties. At the same time, by controlling the values of a and b and the relationship between a and b to fall within the above ranges, the one-dimensional material can constitute a conductive network in the second framework layer to improve the electronic conductivity in the three-dimensional framework. Furthermore, the zero-dimensional material, the one-dimensional material, and the two-dimensional material are of different structures, and therefore, vary in electrical conductivity and lithiophilic properties. In this way, the three-dimensional framework exhibits an electronic conductivity gradient and a lithiophilic gradient, thereby further enabling the lithium metal to deposit from bottom upward. Therefore, the secondary battery according to this application achieves relatively high Coulombic efficiency and good cycle performance.

In some embodiments of this application, the one-dimensional conductive fibers include at least one of multi-walled carbon nanotubes, carbon nanofibers, silver wire, or nickel wire. The zero-dimensional material includes at least one of a metal material, an oxide, a nitride, a sulfide, or a carbide. The metal material includes at least one of Ag, Au, Zn, or an alloy thereof. The oxide includes at least one of $TiO_2$, $SiO_2$, ZnO, $SnO_2$, $Co_3O_4$, or $Fe_2O_3$. The nitride includes $Mo_2N_3$ and/or $Fe_6N_3$. The sulfide includes $MoS_2$ and/or $SnS_2$. The carbide includes FeC. The one-dimensional material includes at least one of multi-walled carbon nanotubes, carbon nanofibers, a silver wire, or a nickel wire. The two-dimensional material includes MXene and/or graphene (Gr). By selecting the above one-dimensional conductive fibers, zero-dimensional material, one-dimensional material, and two-dimensional material, both an electronic conductivity gradient and a lithiophilic gradient are favorably constructed in the three-dimensional framework, thereby improving the electronic conductivity in the negative electrode plate, inducing the lithium metal to enter the interior of the three-dimensional framework and deposit from bottom upward, reducing lithium dendrites and dead lithium generated, and in turn, improving the Coulombic efficiency and cycle performance of the secondary battery.

In some embodiments of this application, a surface of the zero-dimensional material contains a wetting group. The wetting group includes at least one of -OH, -COOR, - COOH, -NH$_2$, or -SO$_3$H. The R in -COOR is selected from methyl, ethyl, propyl, vinyl, or ethynyl. The wetting group induces the lithium metal to deposit, and improves the homogeneity of the lithium metal deposition, thereby improving the Coulombic efficiency and cycle performance of the secondary battery.

In some embodiments of this application, a porosity of the three-dimensional framework is greater than or equal to 80%. By controlling the porosity of the three-dimensional framework to fall within the above range, space is favorably provided for depositing the lithium metal, thereby improving the Coulombic efficiency and cycle performance of the secondary battery.

In some embodiments of this application, a thickness change rate of the three-dimensional framework is less than 10% when the lithium metal is deposited in the three-dimensional framework at a concentration of 5 mAh/cm$^2$. The thickness change rate falling within the above range indicates that the volume change of the three-dimensional framework is relatively small in the process of depositing lithium in the three-dimensional framework, thereby reducing the thickness expansion rate of the negative electrode plate, and in turn, achieving a relatively low thickness expansion rate of the secondary battery according to this application.

A second aspect of this application provides an electronic device. The electronic device includes the secondary battery disclosed in any one of the preceding embodiments. The secondary battery according to this application achieves relatively high Coulombic efficiency and cycle performance, and therefore, the resulting secondary battery achieves relatively high Coulombic efficiency and cycle performance.

Some of the beneficial effects of this application are as follows:

This application provides a secondary battery. The secondary battery includes a negative electrode plate and a separator. The negative electrode plate includes a three-dimensional framework. The three-dimensional framework includes a first framework layer and a second framework layer. The first framework layer includes one-dimensional conductive fibers. The second framework layer includes a zero-dimensional material, a one-dimensional material, and a two-dimensional material. The zero-dimensional material is a lithiophilic material. A thickness of the three-dimensional framework is 10 $\mu$m to 200 $\mu$m. A thickness of the first framework layer is 0 $\mu$m to 10 $\mu$m. A thickness of the second framework layer is 10 $\mu$m to 200 $\mu$m. Based on a mass of the second framework layer, a mass percent of the zero-dimensional material is 1 % to 30%. Amass ratio between the one-dimensional material and the two-dimensional material is 1: 7 to 20: 1. The negative electrode plate of the secondary battery according to this application includes a three-dimensional framework. By controlling the thickness of the three-dimensional framework, the thickness of the first framework layer, the thickness of the second framework layer, the mass percent of the zero-dimensional material, and the mass ratio between the one-dimensional material and the two-dimensional material to fall within the above ranges, a lithiophilic gradient is favorably constructed in the three-dimensional framework, so as to enable lithium metal to enter the interior of the three-dimensional framework and deposit from bottom upward, thereby reducing lithium dendrites and dead lithium generated, and improving the Coulombic efficiency, cycle performance, and safety performance of the secondary battery. Specifically, the first framework layer improves the electronic conductivity of the three-dimensional framework. With respect to the second framework layer, on the one hand, the zero-dimensional material exhibits a tip effect and is a lithiophilic material, and is dispersed in the two-dimensional material, thereby reducing the nucleation overpotential of the lithium metal and inducing the lithium metal to deposit. On the other hand, the zero-dimensional material is a lithiophilic material, and can homogenize the lithium ion flow and improve the homogeneity of the lithium metal deposition. Furthermore, the zero-dimensional material, the one-dimensional material, and the two-dimensional material differ in structure, and therefore, vary in lithiophilic properties, thereby forming a lithiophilic gradient in the three-dimensional framework and making the lithium metal deposit from bottom upward. Moreover, the two-dimensional material is used as a matrix for the zero-dimensional material and the one-dimensional material, so that the formed three-dimensional framework possesses a high porosity and a high specific surface area, thereby providing space for the lithium metal deposition. In this way, the amount of generated lithium dendrites and dead lithium is reduced, and the Coulombic efficiency, cycle performance and safety performance of the secondary battery according to this application are improved. In addition, the lithium metal deposited in the pores of the three-dimensional framework can suppress the volume expansion of the lithium metal, thereby improving the expansion resistance of the secondary battery.

Definitely, a single product or method in which the technical solution of this application is implemented does not necessarily achieve all of the above advantages concurrently.

## BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.

FIG. 1 is a schematic structural diagram of a three-dimensional framework according to some embodiments of this application;

FIG. 2 is a scanning electron microscope image of a three-dimensional framework according to Embodiment 1 of this application; and

FIG. 3 shows a capacity fading curve of a lithium metal battery according to Embodiment 1 and Comparative Embodiment 4 of this application.

## DETAILED DESCRIPTION OF EMBODIMENTS

The following describes the technical solutions in some embodiments of this application clearly in detail with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in the following description, this application is construed by using a lithium metal battery as an example of the secondary battery, but the secondary battery of this application is not limited to the lithium metal battery.

This application provides a secondary battery and an electronic device to improve the Coulombic efficiency and cycle life of the secondary battery. Specific technical solutions are as follows:
A first aspect of this application provides a secondary battery. The secondary battery includes a negative electrode plate and a separator. The negative electrode plate includes a three-dimensional framework. The three-dimensional framework includes a first framework layer and a second framework layer. The first framework layer includes one-dimensional conductive fibers. The second framework layer includes a zero-dimensional material, a one-dimensional material, and a two-dimensional material. The zero-dimensional material is a lithiophilic material. A thickness of the three-dimensional framework is 10 $\mu$m to 200 $\mu$m. A thickness of the first framework layer is 0 $\mu$m to 10 $\mu$m. A thickness of the second framework layer is 10 $\mu$m to 200 $\mu$m.

Preferably, the thickness of the three-dimensional framework is 30 $\mu$m to 180 $\mu$m, and the thickness of the second framework layer is 30 $\mu$m to 80 $\mu$m. For example, the thickness of the three-dimensional framework may be 10 $\mu$m, 20 $\mu$m, 30 $\mu$m, 40 $\mu$m, 60 $\mu$m, 80 $\mu$m, 100 $\mu$m, 120 $\mu$m m, 140 $\mu$m, 160 $\mu$m, 180 $\mu$m, 200 $\mu$m, or a value falling within a range formed by any two thereof. For example, the thickness of the first framework layer may be 0 $\mu$m, 2 $\mu$m, 4 $\mu$m, 6 $\mu$m, 8 $\mu$m, 10 $\mu$m, or a value falling within a range formed by any two thereof. For example, the thickness of the second framework layer may be 10 $\mu$m, 20 $\mu$m, 30 $\mu$m, 40 $\mu$m, 60 $\mu$m, 80 $\mu$m, 100 $\mu$m, 120 $\mu$m, 140 $\mu$m, 160 $\mu$m, 180 $\mu$m, 200 $\mu$m, or a value falling within a range formed by any two thereof. Based on a mass of the second framework layer, a mass percent of the zero-dimensional material is 1 % to 30%. Preferably, the mass percent of the zero-dimensional material is 1 % to 10%. For example, the mass percent of the zero-dimensional material may be 1%, 5%, 10%, 15%, 20%, 25%, 30%, or a value falling within a range formed by any two thereof. A mass ratio between the one-dimensional material and the two-dimensional material is 1: 7 to 20: 1. For example, the mass ratio between the one-dimensional material and the two-dimensional material may be 1: 7, 2: 1, 4: 1, 6: 1, 8: 1, 10: 1, 12: 1, 14: 1, 16: 1, 18: 1, 20: 1, or a value falling within a range formed by any two thereof. In this application, a lithiophilic material means a material interacting with a lithium ion and inducing lithium deposition; a zero-dimensional material means a particulate material containing particles that may be regular particles such as spherical particles or irregular particles such as quasi-spherical particles; a one-dimensional material means a wire-shaped material; and a two-dimensional material means a sheet-shaped material.

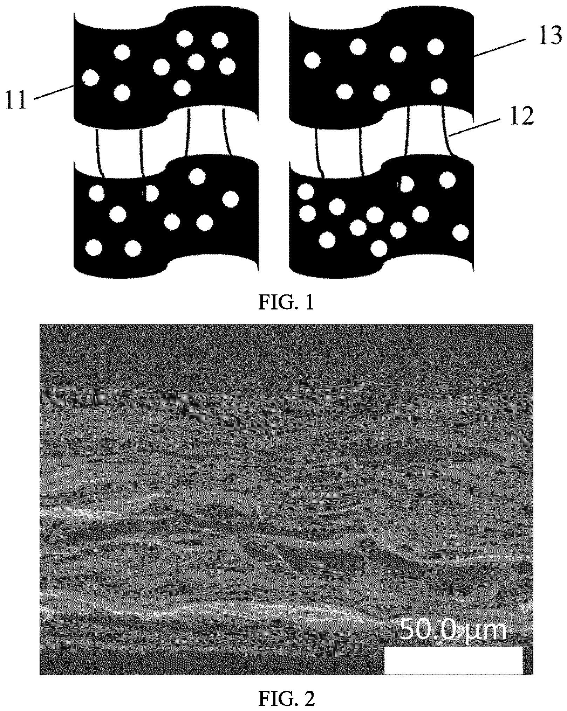

FIG. 1 is a schematic diagram of a three-dimensional framework according to some embodiments of this application. As can be seen, a zero-dimensional material 11 is particulate, a one-dimensional material 12 is wire-shaped, and a two-dimensional material 13 is sheet-shaped. The zero-dimensional material 11, the one-dimensional material 12, and the two-dimensional material 13 together form a three-dimensional framework. Specifically, the one-dimensional conductive fibers in the first framework layer improve the electronic conductivity of the three-dimensional framework. With respect to the second framework layer, on the one hand, the zero-dimensional material exhibits a tip effect and is a lithiophilic material, and is dispersed in the two-dimensional material, thereby reducing the nucleation overpotential of the lithium metal and inducing the lithium metal to deposit. On the other hand, the zero-dimensional material is a lithiophilic material, and can homogenize the lithium ion flow and improve the homogeneity of the lithium metal deposition. Furthermore, the zero-dimensional material, the one-dimensional material, and the two-dimensional material differ in structure, and therefore, vary in lithiophilic properties, thereby forming a lithiophilic gradient in the three-dimensional framework and making the lithium metal deposit from bottom upward. Moreover, the two-dimensional material is used as a matrix for the zero-dimensional material and the one-dimensional material, so that the formed three-dimensional framework possesses a high porosity and a high specific surface area, thereby providing space for the lithium metal deposition. In this way, the amount of generated lithium dendrites and dead lithium is reduced, and the Coulombic efficiency, cycle performance and safety performance of the secondary battery according to this application are improved. In addition, the lithium metal deposited in the pores of the three-dimensional framework can suppress the volume expansion of the lithium metal, thereby improving the expansion resistance of the secondary battery. Specifically, when the thickness of the three-dimensional framework is overly small (for example, less than 10 $\mu$m), the lithiophilic gradient formed in the three-dimensional framework is not evident, and the energy difference is relatively small, thereby being unfavorable to the deposition of lithium metal, and impairing the Coulombic efficiency and cycle performance of the secondary battery. When the thickness of the three-dimensional framework is overly large (for example, greater than 200 $\mu$m), the excessive thickness is unfavorable to electron conduction in the three-dimensional framework, reduces the current density of the secondary battery, and causes side reactions, thereby impairing the Coulombic efficiency and cycle performance of the secondary battery. When the thickness of the first framework layer is overly large (for example, greater than 10 $\mu$m), the thick first framework layer adversely affects the transport of electrons and lithium ions, thereby impairing the Coulombic efficiency and cycle performance of the secondary battery. When the thickness of the second framework layer is overly small (for example, less than 10 $\mu$m), the space is not enough for depositing the lithium metal, thereby impairing the Coulombic efficiency and cycle performance of the secondary battery. When the thickness of the second framework layer is overly large (for example, greater than 200 $\mu$m), the excessive thickness reduces the current density of the secondary battery, and causes side reactions, thereby impairing the Coulombic efficiency of the secondary battery. When the mass percent of the zero-dimensional material is overly low (for example, less than 1%), the low mass percent is unfavorable to inducing lithium metal deposition in the three-dimensional framework, thereby impairing the cycle performance of the secondary battery. When the mass percent of the zero-dimensional material is overly high (for example, greater than 30%), the zero-dimensional materials are prone to be agglomerated with each other. In addition, because the zero-dimensional material is lithiophilic, the agglomeration consumes a large number of lithium ions, thereby impairing the Coulombic efficiency and cycle performance of the secondary battery. When the mass ratio between the one-dimensional material and the two-dimensional material in the three-dimensional framework is relatively low (for example, less than 1: 7), that is, when the proportion of the one-dimensional material is overly low, a lithiophilic gradient can hardly be formed, thereby adversely affecting the lithium metal deposition. When the mass ratio between the one-dimensional material and the two-dimensional material in the three-dimensional framework is relatively large (for example, greater than 20: 1), that is, when the proportion of the two-dimensional material is overly low, the two-dimensional material is unable to support the three-dimensional framework, thereby reducing the uniformity of distribution of the zero-dimensional material in the three-dimensional framework, and in turn, impairing the Coulombic efficiency and cycle performance of the secondary battery. Therefore, by controlling the thickness of the three-dimensional framework, the thickness of the first framework layer, the thickness of the second framework layer, the mass percent of the zero-dimensional material, and the mass ratio between the one-dimensional material and the two-dimensional material to fall within the above ranges, a lithiophilic gradient is favorably constructed in the three-dimensional framework, so as to favorably induce lithium metal to enter the interior of the three-dimensional framework and deposit from bottom upward, thereby reducing lithium dendrites and dead lithium generated, and improving the Coulombic efficiency and cycle performance of the secondary battery.

In some embodiments of this application, the negative electrode plate includes a metallic lithium layer. The second framework layer is located between the first framework layer and the metallic lithium layer. A thickness of the metallic lithium layer is 1 $\mu$m to 100 $\mu$m, and preferably 5 $\mu$m to 50 $\mu$m. For example, the thickness of the metallic lithium layer may be 1 $\mu$m, 20 $\mu$m, 40 $\mu$m, 60 $\mu$m, 80 $\mu$m, 100 $\mu$m, or a value falling within a range formed by any two thereof. By introducing the metallic lithium layer into the negative electrode plate and controlling the thickness of the metallic lithium layer to fall within the range specified herein, this application can compensate for the loss of lithium caused by irreversible reactions in the secondary battery during an initial charge, thereby improving the cycle performance of the secondary battery. In some embodiments of this application, a particle diameter of the zero-dimensional material is 0.1 $\mu$m to 5 $\mu$m, and preferably 0.1 $\mu$m to 1 $\mu$m. For example, the particle diameter of the zero-dimensional material may be 0.1 $\mu$m, 1 $\mu$m, 2 $\mu$m, 3 $\mu$m, 4 $\mu$m, 5 $\mu$m, or a value falling within a range formed by any two thereof. By controlling the particle diameter of the zero-dimensional material to fall within the range specified herein, this application favorably induces the lithium metal to deposit, and improves the uniformity of the lithium metal deposition, thereby improving the Coulombic efficiency and cycle performance of the secondary battery.

In some embodiments of this application, a diameter of the one-dimensional material is 1 nm to 2000 nm, and a length-to-diameter ratio of the one-dimensional material is 0.1 to 20000. Preferably, the diameter of the one-dimensional material is 1 nm to 300 nm, and the length-to-diameter ratio of the one-dimensional material is 0.67 to 20000. More preferably, the diameter of the one-dimensional material is 1 nm to 50 nm, and the length-to-diameter ratio of the one-dimensional material is 5000 to 20000. For example, the diameter of the one-dimensional material is 1 nm, 1.5 nm, 2 nm, 2.5 nm, 3 nm, 5 nm, 10 nm, 50 nm, 100 nm, 250 nm, 500 nm, 1000 nm, 1500 nm, 2000 nm, or a value falling within a range formed by any two thereof. For example, the length-to-diameter ratio of the one-dimensional material may be 0.1, 0.67, 1, 1000, 2500, 5000, 6000, 7000, 7500, 8500, 9500, 10000, 12500, 13500, 14500, 15000, 17500, 20000, or a value falling within a range formed by any two thereof. By controlling the diameter and the length-to-diameter ratio of the one-dimensional material to fall within the range specified herein, the electron conduction is facilitated in the three-dimensional framework, thereby improving the Coulombic efficiency and cycle performance of the secondary battery.

In some embodiments of this application, a particle diameter of the zero-dimensional material is 0.1 $\mu$m to 5 $\mu$m; a diameter of the one-dimensional material is 0.001 $\mu$m to 2 $\mu$m, and the length-to-diameter ratio of the one-dimensional material is 0.1 to 20000. Preferably, the particle diameter of the zero-dimensional material is 0.1 $\mu$m to 1 $\mu$m; the diameter of the one-dimensional material is 0.001 $\mu$m to 0.3 $\mu$m, and the length-to-diameter ratio of the one-dimensional material is 0.67 to 20000. By controlling the particle diameter of the zero-dimensional material as well as the diameter and length-to-diameter ratio of the one-dimensional material to fall within the above ranges, the lithium metal is favorably induced to deposit, and the electron conduction is facilitated in the three-dimensional framework, thereby improving the Coulombic efficiency and cycle performance of the secondary battery.

In some embodiments of this application, the two-dimensional material includes titanium, carbon, and a surface group. The surface group includes at least one of -F, -O, or -OH. By selecting the above two-dimensional material, the lithium ion flow is favorably homogenized, thereby improving the homogeneity of the lithium metal deposition, and improving the Coulombic efficiency and cycle performance of the secondary battery.

In some embodiments of this application, an electrical conductivity a of the one-dimensional material satisfies: $a \geq 1 \times 10^{-6}$ S/cm, and an electrical conductivity b of the two-dimensional material satisfies: $b \geq 2$ S/cm, and $b > a$. Preferably, the electrical conductivity of the one-dimensional material satisfies: $1 \times 10^{-6}$ S/cm $\leq a \leq 5000$ S/cm, and the electrical conductivity of the two-dimensional material satisfies: 2 S/cm $\leq$ b $\leq$ 50000 S/cm. For example, the electrical conductivity of the one-dimensional material may be $1 \times 10^{-6}$ S/cm, $1 \times 10^{-5}$ S/cm, $1 \times 10^{-4}$ S/cm, $1 \times 10^{-3}$ S/cm, $1 \times 10^{-2}$ S/cm, $1 \times 10^{-1}$ S/cm, 1 S/cm, 40 S/cm, 60 S/cm, 80 S/cm, 86 S/cm, 90 S/cm, 95 S/cm, 100 S/cm, 105 S/cm 150 S/cm, 200 S/cm, 300 S/cm, 400 S/cm, 500 S/cm, 2000 S/cm, 5000 S/cm, or a value falling within a range formed by any two thereof. For another example, the electrical conductivity of the two-dimensional material may be 2 S/cm, 5 S/cm, 50 S/cm, 150 S/cm, 300 S/cm, 450 S/cm, 500 S/cm, 600 S/cm, 700 S/cm, 750 S/cm, 800 S/cm, 850 S/cm, 900 S/cm, 1000 S/cm, 5000 S/cm, 50000 S/cm, or a value falling within a range formed by any two thereof. When the electrical conductivity of the one-dimensional material and the two-dimensional material falls within the above range, the one-dimensional material and the two-dimensional material are of good electron-conducting properties. At the same time, by controlling the values of a and b and the relationship between a and b to fall within the above ranges, the one-dimensional material can constitute a conductive network in the second framework layer to improve the electronic conductivity in the three-dimensional framework. Furthermore, the zero-dimensional material, the one-dimensional material, and the two-dimensional material are of different structures, and therefore, vary in electrical conductivity and lithiophilic properties. In this way, the three-dimensional framework exhibits an electronic conductivity gradient and a lithiophilic gradient, thereby further enabling the lithium metal to deposit from bottom upward. Therefore, the secondary battery according to this application achieves relatively high Coulombic efficiency and good cycle performance.

In some embodiments of this application, the one-dimensional conductive fibers include at least one of multi-walled carbon nanotubes (CNTs), carbon nanofibers (CNFs), silver wire, or nickel wire. The zero-dimensional material includes at least one of a metal material, an oxide, a nitride, a sulfide, or a carbide. The metal material includes at least one of Ag, Au, Zn, or an alloy thereof. The oxide includes at least one of $TiO_2$, $SiO_2$, ZnO, $SnO_2$, $Co_3O_4$, or $Fe_2O_3$. The nitride includes $Mo_2N_3$ and/or $Fe_6N_3$. The sulfide includes $MoS_2$ and/or $SnS_2$. The carbide includes FeC. The one-dimensional material includes at least one of multi-walled carbon nanotubes, carbon nanofibers, a silver wire, or a nickel wire. The two-dimensional material includes MXene and/or graphene (Gr). The zero-dimensional material is a good lithiophilic material. The one-dimensional material and the two-dimensional material are good conductive materials, and possess good electron-conducting properties. By selecting the above one-dimensional conductive fibers, zero-dimensional material, one-dimensional material, and two-dimensional material, both an electronic conductivity gradient and a lithiophilic gradient are favorably constructed in the three-dimensional framework, thereby improving the electronic conductivity in the negative electrode plate, inducing the lithium metal to enter the interior of the three-dimensional framework and deposit from bottom upward, reducing lithium dendrites and dead lithium generated, and in turn, improving the Coulombic efficiency and cycle performance of the secondary battery. The diameter and the length-to-diameter ratio of the one-dimensional conductive fibers are not particularly limited herein, as long as the objectives of this application can be achieved. For example, the diameter of the one-dimensional conductive fibers is 0.001 $\mu$m to 2 $\mu$m, and the length-to-diameter ratio of the one-dimensional conductive fibers may be 0.1 to 20000.

In some embodiments of this application, a surface of the zero-dimensional material contains a wetting group. The wetting group includes at least one of -OH, -COOR, - COOH, $-NH_2$, or $-SO_3H$. The R in -COOR is at least one selected from methyl, ethyl, propyl, vinyl, or ethynyl. The wetting group induces the lithium metal to deposit, and improves the homogeneity of the lithium metal deposition, thereby improving the Coulombic efficiency and cycle performance of the secondary battery.

In some embodiments of this application, a porosity of the three-dimensional framework is greater than or equal to 80%. For example, the porosity of the three-dimensional framework may be 80%, 84%, 86%, 88%, 90%, 92%, or a value falling within a range formed by any two thereof. By controlling the porosity of the three-dimensional framework to fall within the above range, space is favorably provided for depositing the lithium metal, thereby improving the Coulombic efficiency and cycle performance of the secondary battery.

In some embodiments of this application, a thickness change rate of the three-dimensional framework is less than 10% when the lithium metal is deposited in the three-dimensional framework at a concentration of 5 mAh/cm$^2$. For example, the thickness change rate of the three-dimensional framework may be 1%, 2%, 4%, 6%, 8%, 10%, or a value falling within a range formed by any two thereof. The thickness change rate falling within the above range indicates that the volume change of the three-dimensional framework is relatively small in the process of depositing lithium in the three-dimensional framework, thereby reducing the thickness expansion rate of the negative electrode plate, and in turn, achieving a lower thickness expansion rate of the secondary battery according to this application.

In some embodiments of this application, the metallic lithium layer is obtained by pre-supplementing of lithium. The pre-supplementing method of lithium is not particularly limited herein, as long as the objectives of this application can be achieved. As an example, a pre-supplementing method of lithium may include, but is not limited to: cold-pressing, hot-pressing, electrochemical supplementing of lithium, or lithium supplementing by physical vapor deposition (PVD).

In the application, the three-dimensional framework is prepared by suction-filtering. For example, a preparation method includes: first, adding a zero-dimensional material, a one-dimensional material, and a two-dimensional material into deionized water, and ultrasonically dispersing the materials until a homogeneous state to obtain a solution 1; subsequently, ultrasonically dispersing the one-dimensional conductive fibers in deionized water until a homogeneous state to obtain a solution 2; suction-filtering the solution 1 by using a suction-filtering device, adding the solution 2 for suction-filtering upon completion of the suction-filtration of the solution 1; drying the filtered product upon completion of the suction-filtration to obtain a film; and optionally, cold-pressing and laminating the film and the lithium metal to obtain a negative electrode plate. The suction-filtration device and the suction-filtration process are known in the art, and are not particularly limited herein. The solid content of the solution 1 and the solution 2 is not particularly limited herein, and may be selected according to the actual situation, as long as the objectives of this application can be achieved. The pressure applied in the cold-pressing and lamination process is not particularly limited herein, as long as the objectives of this application can be achieved. For example, the pressure applied in the cold-pressing and lamination may be 0.1 t to 3 t.

Generally, the solid content of the solution 1 may be adjusted by adjusting the volume of deionized water in the solution 1, and the thickness of the second framework layer may be adjusted by adjusting the solid content of the solution 1 or by adjusting the added volume and the filtering duration in suction-filtering the solution 1. For example, if the filtered volume and filtering duration of the solution 1 remain constant, the thickness of the second framework layer increases with the increase of the solid content of the solution 1; if the filtered volume and filtering duration of the solution 1 remain constant, the thickness of the second framework layer decreases with the decrease of the solid content of the solution 1. If the solid content of the solution 1 remains constant, the thickness of the second framework layer increases with the increase of the filtered volume and/or the decrease of the filtering duration of the solution 1; if the solid content of the solution 1 remains constant, the thickness of the second framework layer decreases with the decrease of the filtered volume and/or the increase of the filtering duration of the solution 1.

Generally, the solid content of the solution 2 may be adjusted by adjusting the volume of deionized water in the solution 2, and the thickness of the first framework layer may be adjusted by adjusting the solid content of the solution 2 or by adjusting the added volume and the filtering duration in suction-filtering the solution 2. For example, if the filtered volume and filtering duration of the solution 2 remain constant, the thickness of the first framework layer increases with the increase of the solid content of the solution 2; if the filtered volume and filtering duration of the solution 2 remain constant, the thickness of the first framework layer decreases with the decrease of the solid content of the solution 2. If the solid content of the solution 2 remains constant, the thickness of the first framework layer increases with the increase of the filtered volume and/or the decrease of the filtering duration of the solution 2; if the solid content of the solution 2 remains constant, the thickness of the first framework layer decreases with the decrease of the filtered volume and/or the increase of the filtering duration of the solution 2.

The thickness of the three-dimensional framework increases with the increase of the thickness of the first framework layer and/or the second framework layer, and decreases with the decrease of the thickness of the first framework layer and/or the second framework layer.

The zero-dimensional materials of different particle diameters and the one-dimensional materials of different diameters and different length-to-diameter ratios for use in this application are commercially available, and the sources of such materials are not particularly limited herein, as long as the objectives of this application can be achieved. The secondary battery for use in this application is not particularly limited herein, and may include any device in which an electrochemical reaction occurs. The secondary batteries may include, but are not limited to, a lithium metal secondary battery, a lithium-ion secondary battery, a sodium-ion secondary battery, a lithium polymer secondary battery, and a lithium-ion polymer secondary battery.

The secondary battery in this application may further include a positive electrode plate. The positive electrode plate is not particularly limited herein, as long as the objectives of this application can be achieved. For example, the positive electrode plate generally includes a positive current collector and a positive electrode material layer. The positive electrode material layer may be disposed on one surface of the positive current collector in a thickness direction or on both surfaces of the positive current collector in the thickness direction. It is hereby noted that the "surface" here may be the entire region of the positive current collector, or a partial region of the positive current collector, without being particularly limited herein, as long as the objectives of the application can be achieved. The positive current collector is not particularly limited herein, as long as the objectives of this application can be achieved. For example, the positive current collector may include, but is not limited to, an aluminum foil, an aluminum alloy foil, a composite current collector (such as an aluminum carbon composite current collector), or the like. The thickness of the positive current collector is not particularly limited herein, as long as the objectives of this application can be achieved. For example, the thickness is 8 $\mu$m to 20 $\mu$m.

In this application, the positive electrode material layer includes a positive electrode material. The positive electrode material is not particularly limited herein, as long as the objectives of this application can be achieved. For example, the positive electrode material may include at least one of a composite oxide of lithium or a composite oxide of a transition metal element. The transition metal element is not particularly limited herein, as long as the objectives of this application can be achieved. For example, the transition metal element may include at least one of nickel, manganese, cobalt, or iron. Specifically, the positive electrode material may include at least one of lithium nickel cobalt manganese oxide, lithium nickel cobalt aluminum oxide, lithium iron phosphate, a lithium-rich manganese-based material, lithium cobalt oxide, lithium manganese oxide, lithium manganese iron phosphate, or lithium titanium oxide.

In this application, the positive electrode material layer may further include a positive conductive agent. The positive conductive agent is not particularly limited herein, as long as the objectives of this application can be achieved. For example, the conductive agent may include, but is not limited to, at least one of conductive carbon black (Super P), carbon nanotubes (CNTs), carbon fibers, acetylene black, flake graphite, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. In this application, the positive electrode material layer may further include a positive electrode binder. The positive electrode binder is not particularly limited herein, as long as the objectives of this application can be achieved. For example, the binder may include, but is not limited to, at least one of polyacrylic acid, polyacrylic acid sodium, polyacrylic acid potassium, polyacrylic acid lithium, polyimide, polyvinyl alcohol, carboxymethyl cellulose, sodium carboxymethyl cellulose, lithium carboxymethyl cellulose, polyamide imide, styrene butadiene rubber, or polyvinylidene difluoride.

Optionally, the positive electrode plate may further include a conductive layer. The conductive layer is located between the positive current collector and the positive electrode material layer. The constituents of the conductive layer are not particularly limited herein, and may be a conductive layer commonly used in the art. For example, the conductive layer may include, but is not limited to, the positive conductive agent and the positive electrode binder.

The secondary battery in this application further includes a separator. The separator is not particularly limited herein, and may be selected by a person skilled in the art as actually required, as long as the objectives of this application can be achieved. For example, the separator may be made of a material including but not limited to at least one of: a polyethylene (PE)- or polypropylene (PP)-based polyolefin (PO), a polyester (such as polyethylene terephthalate (PET)), cellulose, polyimide (PI), polyamide (PA), spandex, or aramid. The type of the separator may include, but is not limited to, at least one of a woven film, a non-woven film (non-woven fabric), a microporous film, a composite film, separator paper, a laminated film, or a spinning film. For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound. For example, the inorganic compound layer includes inorganic particles and a binder. The inorganic particles are not particularly limited, and may include at least one of: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may include at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene difluoride, poly(vinylidene fluoride-co-hexafluoropropylene), or the like.

The secondary battery in this application further includes an electrolyte solution. The electrolyte solution is not particularly limited herein, and may be selected by a person skilled in the art as actually required, as long as the objectives of this application can be achieved. For example, the electrolyte solution includes an organic solvent and a lithium salt. The types and content of the organic solvent and the lithium salt are not particularly limited herein, as long as the objectives of this application can be achieved. As an example, the organic solvent may include, but is not limited to, at least one of a carbonate compound, a carboxylate compound, an ether compound, or another organic solvent. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1-difluoroethylene carbonate, 1,1,2-trifluoroethylene carbonate, 1,1,2,2-tetrafluoroethylene carbonate, fluoro-2-methyl ethylene carbonate, fluoro-methyl ethylene carbonate, 1,2-difluoro-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, ethoxy-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. As an example, the lithium salt may include, but is not limited to, at least one of LiTFSI, $LiPF_6$, $LiBF_4$, $LiAsF_6$, $LiClO_4$, $LiB(C_6H_5)_4$, $LiCH_3SO_3$, $LiCF_3SO_3$, $LiC(SO_2CF_3)_3$, $Li_2SiF_6$, lithium bis(oxalato)borate (LiBOB), or lithium difluoroborate. The process of preparing the secondary battery in this application is well known to a person skilled in the art, and is not particularly limited herein. For example, the preparation process may include, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain a secondary battery; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain a secondary battery. In addition, an overcurrent prevention element, a guide plate, and the like may be placed into a pocket as required, so as to prevent the rise of internal pressure, overcharge, and overdischarge of the secondary battery. The pocket is a pocket known in the art, and is not limited herein. A second aspect of this application provides an electronic device. The electronic device includes the secondary battery disclosed in any one of the preceding embodiments. The electronic device is not particularly limited herein, and may be any electronic device well-known in the prior art. For example, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or lithium-ion capacitor.

**Embodiments**

The implementations of this application are described below in more detail with reference to embodiments and comparative embodiments. Various tests and evaluations are performed by the following methods.

**Test Methods and Devices**

**Testing the Coulombic efficiency**

Putting a lithium metal battery into a 20 °C thermostat, and leaving the battery to stand for 30 minutes so that the temperature of the lithium metal battery becomes constant. Charging the lithium metal battery at a constant current of 0.2C until the voltage reaches 3.7 V, and then charging the battery at a constant voltage of 3.7 V until the current drops to 0.025C, and leaving the battery to stand for 5 minutes. Subsequently, discharging the battery at a constant current of 0.2C until the voltage drops to 2.8 V, and leaving the battery to stand for 5 minutes, thereby completing one charge-discharge cycle. Letting the first-cycle discharge capacity be 100%. Repeating the charge-discharge cycle until the discharge capacity fades to 80%. Stopping the test, calculating a ratio between the discharge capacity and the charge capacity in each cycle, and averaging out the ratios in all the cycles to obtain the Coulombic efficiency.

**Testing the cycle performance**

Putting a lithium metal battery into a 25 °C±2 °C thermostat, and leaving the battery to stand for 2 hours so that the temperature of the lithium-ion battery becomes constant. The cycling process 1 is: Charging the lithium metal battery at a constant current of 0.2C until the voltage reaches 3.7 V, and then charging the battery at a constant voltage of 3.7 V until the current drops to 0.5C, and leaving the battery to stand for 5 minutes; subsequently, discharging the battery at a constant current of 1C until the voltage drops to 2.8V, thereby completing one charge-discharge cycle. Recording a discharge capacity of the lithium metal battery in the first cycle; afterward, iterating the foregoing cycling process 1, and recording the discharge capacity at the end of each cycle. Performing a cycling process 2 to complete one charge-discharge cycle when the iteration proceeds to the 50th cycle, 100th cycle, 150th cycle, 200th cycle, 250th cycle separately. The cycling process 2 is: charging the lithium metal battery at a constant current of 0.05C until the voltage reaches 3.7 V, and then charging the battery at a constant voltage of 3.7 V until the current drops to 0.025C, and leaving the battery to stand for 5 minutes; and then discharging the battery at a constant current of 0.05C until the voltage drops to 2.8 V, thereby completing one charge-discharge cycle. Recording the discharge capacity at the end of each cycle.

Cycle capacity retention rate of a lithium metal battery = (discharge capacity at the end of each cycle/discharge capacity at the end of the first cycle) $\times$ 100%.

Recording the number of cycles when the cycle capacity retention rate of the lithium metal battery drops to 80%. Testing 10 lithium metal batteries for each embodiment and each comparative embodiment, and averaging out the numbers of cycles to obtain a final result.

**Testing the porosity**

Cutting the three-dimensional framework prepared in each embodiment and each comparative embodiment into circular pieces of 10 mm in diameter that serve as specimens. Ensuring that the surface of each specimen is flat without notches. Obtaining a true volume Vi of the circular piece by using a true density tester, calculating the apparent volume as: $V_2 = S \times H$ (S is a surface area of the specimen, and H is the thickness of the specimen), and calculating the porosity as: porosity = $(V_2 - V_1)/V_2 \times 100\%$.

In this test method, the true volume is defined as a volume of a specimen net of pores. The porosity is defined as a ratio of the pore volume of a specimen to the apparent volume of the specimen, and reflects the magnitude of pores in the specimen. The porosity is essential to ion transport in a lithium metal battery.

**Scanning electron microscope (SEM) test**

Performing the SEM test by using a Philips XL-30 field emission scanning electron microscope.

**Method for measuring the thicknesses of a three-dimensional framework, a first framework layer, and a second framework layer**

Suction-filtering a solution 1 by using a suction-filtering device, adding a solution 2 for suction-filtering upon completion of the suction-filtration of the solution 1, drying the filtered product upon completion of the suction-filtration to obtain a film, and measuring the thickness of the film with a micrometer, denoted as $H_0$; suction-filtering the solution 1 by using the suction-filtering device, drying the filtered product upon completion of the suction-filtration to obtain a film 1, and measuring the thickness of the film 1 with a micrometer, denoted as $H_1$. The thickness of the three-dimensional framework is $H_0$, the thickness of the first framework layer is $H_0$-$H_1$, and the thickness of the second framework layer is $H_1$. The solution 1 and solution 2 are the solution 1 and solution 2 in each embodiment or each comparative embodiment.

**Testing the thickness change rate**

Cutting a prepared three-dimensional framework to obtain a cross-section. Capturing an image of the cross-section by using a Philips XL-30 field emission scanning electron microscope, so as to obtain a scanning electron microscope (SEM) image of the cross-section of the three-dimensional framework. Importing the SEM image into the Nano Measurer software to obtain a thickness of the three-dimensional framework, denoted as $H_2$.

Discharging a lithium metal battery in each embodiment or each comparative embodiment at a current density of 0.2 mA/cm$^2$ for a duration of $T_0$ hour, so that the concentration of deposited lithium metal is 5 mAh/cm$^2$. Disassembling the lithium metal battery, cleaning the electrode plate by use of DME and then cutting the electrode plate to obtain a cross-section. Capturing an image of the cross-section of the three-dimensional framework in the electrode plate by using a Philips XL-30 field emission scanning electron microscope, so as to obtain a SEM image of the cross-section of the three-dimensional framework in the electrode plate. Importing the SEM image into the Nano Measurer software to obtain a thickness of the three-dimensional framework in the electrode plate, denoted as $H_3$. In Embodiments 1 to 24 and Comparative Embodiments 1 to 10, $T_0$ is 25 h.

$$\text{Thickness change rate} = (H_3 - H_2)/H_2 \times 100\%.$$

**Testing the electrical conductivity**

Testing the electrical conductivity in accordance with the national standard *Test Method of Electrical Conductivity Analyzer* (GB 11007-89).

**Embodiment 1**

**<Preparing a negative electrode plate>**

Adding 7 mg ($m_1$) of multi-walled carbon nanotubes (manufacturer: Aladdin, designation: 308068-56-6) as one-dimensional material and 1 mg ($m_2$) of MXene (manufacturer: Nanjing XFNANO Materials Tech Co., Ltd., designation: 12363-89-2) as a two-dimensional material into 100 mL of deionized water, and ultrasonically dispersing the mixture thoroughly. Adding 0.16 mg ($m_0$) of tin dioxide particles as a zero-dimensional material, and continuing to sonicate the mixture until the particles are dispersed homogeneously, so as to obtain a solution 1. The particle diameter of the zero-dimensional material is 0.3 $\mu$m. The diameter of the one-dimensional material is 2 nm, and the length-to-diameter ratio of the one-dimensional material is 10000 to 12000. Dispersing 1 mg of multi-walled carbon nanotubes (manufacturer: Aladdin, designation: 308068-56-6) as one-dimensional conductive fibers ultrasonically in 20 mL of deionized water until a homogeneous state to obtain a solution 2.

Suction-filtering 100 mL ($A_1$) of the solution 1 by use of a suction-filtering device for a duration (ti) of 180 minutes, adding 20 mL ($A_2$) of the solution 2 upon completion of the suction-filtration of the solution 1, and continuing to suction-filter for a duration ($t_2$) of 30 minutes, and then putting the filtered product into an 80 °C oven to dry for 24 hours to obtain a film. Cold-pressing and laminating the film with a 20 $\mu$m-thick lithium metal sheet to obtain a negative electrode plate. The thickness of the first framework layer is 5 $\mu$m, the thickness of the second framework layer is 50 $\mu$m, the thickness of the three-dimensional framework is 55 $\mu$m, and the cold-pressing pressure is 0.2 t. Subsequently, die-cutting the negative electrode plate into $\varphi$18 mm circular pieces for future use.

**<Preparing a positive electrode plate>**

Mixing lithium iron phosphate ($LiFePO_4$) as a positive active material, conductive carbon black (Super P), and polyvinylidene difluoride (PVDF) at a mass ratio of 97.5: 1.0: 1.5, adding N-methyl-pyrrolidone (NMP) as a solvent to form a slurry with a solid content of 75 wt%, and stirring well. Applying the slurry evenly onto one surface of a 10 $\mu$m-thick positive current collector aluminum foil, and oven-drying the slurry at 90 °C to obtain a positive electrode plate with a single side coated with a positive electrode material layer of 50 $\mu$m in thickness. Subsequently, repeating the above steps on the other surface of the positive electrode plate to obtain a positive electrode plate coated with the positive electrode material layer on both sides. Subsequently, cold-pressing and cutting the positive electrode plate into $\phi$14 mm circular pieces for future use.

**<Preparing an electrolyte solution>**

Mixing dioxolane (DOL) and dimethyl ether (DME) at a volume ratio of DOL: DME = 1: 1 in a dry argon atmosphere to obtain an organic solvent, adding a lithium salt LiTFSI into the organic solvent, dissolving the lithium salt, and stirring well to obtain an electrolyte solution. The concentration of the lithium salt in the electrolyte solution is 1 mol/L.

**<Separator>**

Using a 15 $\mu$m-thick polyethylene (PE) film (manufactured by Celgard) as a separator.

**<Preparing a lithium metal battery>**

Leaving an opening of a positive electrode shell of a button battery shell to face upward in a vacuum glovebox, putting a gasket and the above-prepared positive electrode plate into the glovebox in sequence, and adding an electrolyte solution dropwise to infiltrate the surface of the positive electrode plate. Subsequently, stacking the separator onto the positive electrode plate, and adding the electrolyte solution dropwise onto the separator. Stacking the above-prepared negative electrode plate, the gasket, and a contact spring onto the separator in sequence after the surface of the separator is wetted by the electrolyte solution. Afterward, fastening the negative electrode shell of the button battery shell, sealing the shell by use of a sealing machine, and pressing the sealed structure to obtain a button battery. The gasket and the contact spring are commercially available, and are not limited herein.

**Embodiment 2**

The operations are the same as those in Embodiment 1 except: in preparing the negative electrode plate, in the solution 1, the mass $m_1$ of the multi-walled carbon nanotubes as a one-dimensional material is 10.5 mg, the mass $m_2$ of the MXene as a two-dimensional material is 1.5 mg, the mass $m_0$ of the tin dioxide particles as a zero-dimensional material is 0.24 mg, and the volume of the deionized water is 150 mL; in the solution 2, the mass of the multi-walled carbon nanotubes as one-dimensional conductive fibers is 1.5 mg, and the volume of the deionized water is 30 mL; the amount $A_1$ of the solution 1 added during suction-filtration is 150 mL, the filtering duration ti is 288 min, the amount $A_2$ of the solution 2 added is 20 mL, and the diameter of the one-dimensional material and the length-to-diameter ratio of the one-dimensional material are adjusted in accordance with Table 1.

**Embodiment 3**

The operations are the same as those in Embodiment 1 except: in preparing the negative electrode plate, in the solution 1, the mass $m_1$ of the multi-walled carbon nanotubes as a one-dimensional material is 14 mg, the mass $m_2$ of the MXene as a two-dimensional material is 2 mg, the mass $m_0$ of the tin dioxide particles as a zero-dimensional material is 0.32 mg, and the volume of the deionized water is 200 mL; in the solution 2, the mass of the multi-walled carbon nanotubes as one-dimensional conductive fibers is 2 mg, and the volume of the deionized water is 40 mL; the amount $A_1$ of the solution 1 added during suction-filtration is 200 mL, the filtering duration ti is 360 min, the amount $A_2$ of the solution 2 added is 20 mL, and the diameter of the one-dimensional material and the length-to-diameter ratio of the one-dimensional material are adjusted in accordance with Table 1.

**Embodiment 4**

The operations are the same as those in Embodiment 1 except: in preparing the negative electrode plate, the amount $A_1$ of the solution 1 added during suction-filtration is 20 mL, the filtering duration ti is 36 min, and the diameter of the one-dimensional material and the length-to-diameter ratio of the one-dimensional material are adjusted in accordance with Table 1.

**Embodiment 5**

The operations are the same as those in Embodiment 1 except: in preparing the negative electrode plate, in the solution 1, the mass $m_1$ of the multi-walled carbon nanotubes as a one-dimensional material is 28 mg, the mass $m_2$ of the MXene as a two-dimensional material is 4 mg, the $m_1$ of the tin dioxide particles as a zero-dimensional material is 0.64 mg, and the volume of the deionized water is 400 mL; during suction-filtration, only the solution 1 is suction-filtered, and the solution 2 is not suction-filtered; the amount $A_1$ of the solution 1 added is 400 mL, and the filtering duration ti is 720 min; and the diameter of the one-dimensional material and the length-to-diameter ratio of the one-dimensional material are adjusted in accordance with Table 1.

**Embodiment 6**

The operations are the same as those in Embodiment 1 except: in preparing the negative electrode plate, in the solution 1, the mass $m_1$ of the multi-walled carbon nanotubes as a one-dimensional material is 14 mg, the mass $m_2$ of the MXene as a two-dimensional material is 2 mg, the mass $m_0$ of the tin dioxide particles as a zero-dimensional material is 0.32 mg, and the volume of the deionized water is 200 mL; the amount $A_1$ of the solution 1 added during suction-filtration is 108 mL, the filtering duration ti is 200 min, the amount $A_2$ of the solution 2 added is 4 mL, the filtering duration $t_2$ is 10 min, and the diameter of the one-dimensional material and the length-to-diameter ratio of the one-dimensional material are adjusted in accordance with Table 1.

**Embodiment 7**

The operations are the same as those in Embodiment 1 except: in preparing the negative electrode plate, in the solution 1, the mass $m_1$ of the multi-walled carbon nanotubes as a one-dimensional material is 14 mg, the mass $m_2$ of the MXene as a two-dimensional material is 2 mg, the mass $m_0$ of the tin dioxide particles as a zero-dimensional material is 0.32 mg, and the volume of the deionized water is 200 mL; the amount $A_1$ of the solution 1 added during suction-filtration is 104 mL, the filtering duration ti is 188 min, the amount $A_2$ of the solution 2 added is 12 mL, the filtering duration $t_2$ is 18 min, and the diameter of the one-dimensional material and the length-to-diameter ratio of the one-dimensional material are adjusted in accordance with Table 1.

**Embodiment 8**

The operations are the same as those in Embodiment 1 except: in preparing the negative electrode plate, in the solution 2, the mass of the multi-walled carbon nanotubes as one-dimensional conductive fibers is 2 mg, and the volume of the deionized water is 40 mL; the amount $A_1$ of the solution 1 added during suction-filtration is 80 mL, the filtering duration ti is 168 min, the amount $A_2$ of the solution 2 added is 40 mL, the filtering duration $t_2$ is 60 min, and the diameter of the one-dimensional material and the length-to-diameter ratio of the one-dimensional material are adjusted in accordance with Table 1.

**Embodiment 9**

The operations are the same as those in Embodiment 1 except: in preparing the negative electrode plate, in the solution 1, the mass $m_1$ of the multi-walled carbon nanotubes as a one-dimensional material is 16 mg, the mass $m_2$ of the MXene as a two-dimensional material is 2 mg, the mass $m_0$ of the tin dioxide particles as a zero-dimensional material is 0.36 mg, and the volume of the deionized water is 200 mL; the amount $A_1$ of the solution 1 added during suction-filtration is 115 mL, the filtering duration ti is 198 min, no solution 2 is added, and the diameter of the one-dimensional material and the length-to-diameter ratio of the one-dimensional material are adjusted in accordance with Table 1.

**Embodiment 10**

The operations are the same as those in Embodiment 1 except: in preparing the negative electrode plate, the mass $m_0$ of the tin dioxide particles as a zero-dimensional material in the solution 1 is 0.08 mg, and the filtering duration ti of the solution 1 is 180 min during suction-filtration, and the diameter of the one-dimensional material and the length-to-diameter ratio of the one-dimensional material are adjusted in accordance with Table 1.

**Embodiment 11**

The operations are the same as those in Embodiment 1 except: in preparing the negative electrode plate, the mass $m_0$ of the tin dioxide particles as a zero-dimensional material in the solution 1 is 0.4 mg, and the filtering duration ti of the solution 1 is 180 min during suction-filtration, and the diameter of the one-dimensional material and the length-to-diameter ratio of the one-dimensional material are adjusted in accordance with Table 1.

**Embodiment 12**

The operations are the same as those in Embodiment 1 except: in preparing the negative electrode plate, the mass $m_0$ of the tin dioxide particles as a zero-dimensional material in the solution 1 is 0.8 mg, and the filtering duration ti of the solution 1 is 180 min during suction-filtration, and the length-to-diameter ratio of the one-dimensional material is adjusted in accordance with Table 1.

**Embodiment 13**

The operations are the same as those in Embodiment 1 except: in preparing the negative electrode plate, the mass $m_0$ of the tin dioxide particles as a zero-dimensional material in the solution 1 is 2.7 mg, and the filtering duration ti of the solution 1 is 180 min during suction-filtration.

**Embodiment 14**

The operations are the same as those in Embodiment 1 except: in preparing the negative electrode plate, in the solution 1, the mass $m_1$ of the multi-walled carbon nanotubes as a one-dimensional material is 7.57 mg, the mass $m_2$ of the MXene as a two-dimensional material is 0.43 mg, and the diameter of the one-dimensional material and the length-to-diameter ratio of the one-dimensional material are adjusted in accordance with Table 1.

**Embodiment 15**

The operations are the same as those in Embodiment 1 except: in preparing the negative electrode plate, in the solution 1, the mass $m_1$ of the multi-walled carbon nanotubes as a one-dimensional material is 2 mg, the mass $m_2$ of the MXene as a two-dimensional material is 6 mg, and the diameter of the one-dimensional material and the length-to-diameter ratio of the one-dimensional material are adjusted in accordance with Table 1.

**Embodiment 16**

The operations are the same as those in Embodiment 1 except: in preparing the negative electrode plate, in the solution 1, the mass $m_1$ of the multi-walled carbon nanotubes as a one-dimensional material is 1 mg, the mass $m_2$ of the MXene as a two-dimensional material is 7 mg, and the diameter of the one-dimensional material and the length-to-diameter ratio of the one-dimensional material are adjusted in accordance with Table 1.

**Embodiment 17**

The operations are the same as those in Embodiment 1 except: in preparing the negative electrode plate, both the one-dimensional material in the solution 1 and the one-dimensional conductive fibers in the solution 2 are carbon nanofibers (manufacturer: Nanjing XFNANO Materials Tech Co., Ltd., designation: 1333-86-4), and the diameter of the one-dimensional material and the length-to-diameter ratio of the one-dimensional material are adjusted in accordance with Table 1.

**Embodiment 18**

The operations are the same as those in Embodiment 1 except: in preparing the negative electrode plate, the two-dimensional material in the solution 1 is graphene (manufacturer: Nanjing XFNANO Materials Tech Co., Ltd., designation: 7440-44-0), and the diameter of the one-dimensional material and the length-to-diameter ratio of the one-dimensional material are adjusted in accordance with Table 1.

**Embodiment 19**

The operations are the same as those in Embodiment 1 except: in preparing the negative electrode plate, the zero-dimensional material in the solution 1 is $SiO_2$, and the diameter of the one-dimensional material and the length-to-diameter ratio of the one-dimensional material are adjusted in accordance with Table 1.

**Embodiment 20**

The operations are the same as those in Embodiment 1 except: in preparing the negative electrode plate, the zero-dimensional material in the solution 1 is $TiO_2$, and the diameter of the one-dimensional material and the length-to-diameter ratio of the one-dimensional material are adjusted in accordance with Table 1.

**Embodiment 21**

The operations are the same as those in Embodiment 1 except: in preparing the negative electrode plate, the zero-dimensional material in the solution 1 is Ag powder (manufacturer: Aladdin, designation: 7440-22-4), the particle diameter of the Ag powder is 0.1 $\mu$m to 1 $\mu$m, and the diameter of the one-dimensional material and the length-to-diameter ratio of the one-dimensional material are adjusted in accordance with Table 1.

**Embodiments 22 to 24**

The operations are the same as those in Embodiment 1 except: in preparing the negative electrode plate, the film is cold-rolled after being dried, and the diameter of the one-dimensional material and the length-to-diameter ratio of the one-dimensional material are adjusted in accordance with Table 1. The pressures applied in the cold-rolling in the three embodiments are 0.8 t, 1.2 t, and 1.5 t, respectively.

**Embodiment 25**

**<Preparing modified $Fe_6N_3$>**

Sintering $Fe_6N_3$ at 500 °C for 2 hours in an $NH_3$ atmosphere to obtain $Fe_6N_3$ containing a wetting group $-NH_2$ on the surface, that is, modified $Fe_6N_3$.

The operations are the same as those in Embodiment 1 except: in preparing the negative electrode plate, the zero-dimensional material in the solution 1 is modified $Fe_6N_3$, and the diameter of the one-dimensional material and the length-to-diameter ratio of the one-dimensional material are adjusted in accordance with Table 1.

**Comparative Embodiment 1**

The operations are the same as those in Embodiment 1 except: in preparing the negative electrode plate, only multi-walled carbon nanotubes are added as a one-dimensional material into the solution 1 in an amount ($m_1$) of 10 mg; during suction-filtration, only the solution 1 is suction-filtered, and the solution 2 is not suction-filtered; the amount $A_1$ of the solution 1 added is 100 mL, the filtering duration ti is 198 min, and the diameter of the one-dimensional material and the length-to-diameter ratio of the one-dimensional material are adjusted in accordance with Table 1.

**Comparative Embodiment 2**

The operations are the same as those in Embodiment 1 except: in preparing the negative electrode plate, in the solution 1, multi-walled carbon nanotubes are added as a one-dimensional material in an amount ($m_1$) of 10 mg, and tin dioxide particles are added as a zero-dimensional material in an amount ($m_0$) of 0.2 mg; during suction-filtration, only the solution 1 is suction-filtered, and the solution 2 is not suction-filtered; the amount $A_1$ of the solution 1 added is 100 mL, the filtering duration ti is 198 min, and the diameter of the one-dimensional material and the length-to-diameter ratio of the one-dimensional material are adjusted in accordance with Table 1.

**Comparative Embodiment 3**

The operations are the same as those in Embodiment 1 except: in preparing the negative electrode plate, only the Mxene is added as a two-dimensional material into the solution 1 in an amount ($m_2$) of 10 mg; during suction-filtration, only the solution 1 is suction-filtered, and the solution 2 is not suction-filtered, the amount $A_1$ of the solution 1 added is 100 mL, and the filtering duration ti is 198 min.

**Comparative Embodiment 4**

The operations are the same as those in Embodiment 1 except that a purchased 50 $\mu$m-thick pre-lithiated lithium-copper composite strip is used as a negative electrode plate.

**Comparative Embodiment 5**

The operations are the same as those in Embodiment 1 except: in preparing the negative electrode plate, in the solution 1, the mass $m_1$ of the multi-walled carbon nanotubes as a one-dimensional material is 4.61 mg, the mass $m_2$ of the MXene as a two-dimensional material is 0.66 mg, the mass $m_0$ of the tin dioxide particles as a zero-dimensional material is 2.89 mg, and the diameter of the one-dimensional material and the length-to-diameter ratio of the one-dimensional material are adjusted in accordance with Table 1.

**Comparative Embodiment 6**

The operations are the same as those in Embodiment 1 except: in preparing the negative electrode plate, in the solution 1, the mass $m_1$ of the multi-walled carbon nanotubes as a one-dimensional material is 7.69 mg, the mass $m_2$ of the MXene as a two-dimensional material is 0.31 mg, the mass $m_0$ of the tin dioxide particles as a zero-dimensional material is 0.16 mg, and the diameter of the one-dimensional material and the length-to-diameter ratio of the one-dimensional material are adjusted in accordance with Table 1.

**Comparative Embodiment 7**

The operations are the same as those in Embodiment 1 except: the amount $A_1$ of the solution 1 added during suction-filtration is 10 mL, the filtering duration ti is 180 min, and the diameter of the one-dimensional material and the length-to-diameter ratio of the one-dimensional material are adjusted in accordance with Table 1.

**Comparative Embodiment 8**

The operations are the same as those in Embodiment 1 except: in preparing the negative electrode plate, in the solution 1, the mass $m_1$ of the multi-walled carbon nanotubes as a one-dimensional material is 35 mg, the mass $m_2$ of the MXene as a two-dimensional material is 5 mg, the mass $m_0$ of the tin dioxide particles as a zero-dimensional material is 0.8 mg, and the volume of the deionized water is 500 mL; the amount $A_1$ of the solution 1 added during suction-filtration is 500 mL, the filtering duration ti is 180 min, and the diameter of the one-dimensional material and the length-to-diameter ratio of the one-dimensional material are adjusted in accordance with Table 1.

**Comparative Embodiment 9**

The operations are the same as those in Embodiment 1 except: in preparing the negative electrode plate, in the solution 1, the mass $m_1$ of the multi-walled carbon nanotubes as a one-dimensional material is 23.2 mg, the mass $m_2$ of the MXene as a two-dimensional material is 3.32 mg, the mass $m_0$ of the tin dioxide particles as a zero-dimensional material is 14.28 mg, and the volume of the deionized water is 500 mL; the amount $A_1$ of the solution 1 added during suction-filtration is 500 mL, the filtering duration ti is 180 min, and the diameter of the one-dimensional material and the length-to-diameter ratio of the one-dimensional material are adjusted in accordance with Table 1.

**Comparative Embodiment 10**

The operations are the same as those in Embodiment 1 except: in preparing the negative electrode plate, in the solution 1, the mass $m_1$ of the multi-walled carbon nanotubes as a one-dimensional material is 25.5 mg, the mass $m_2$ of the MXene as a two-dimensional material is 1.02 mg, the mass $m_0$ of the tin dioxide particles as a zero-dimensional material is 14.28 mg, and the volume of the deionized water is 500 mL; the amount $A_1$ of the solution 1 added during suction-filtration is 500 mL, the filtering duration ti is 180 min, and the diameter of the one-dimensional material and the length-to-diameter ratio of the one-dimensional material are adjusted in accordance with Table 1.

Table 1 shows the preparation parameters and performance test results of each embodiment and comparative embodiment.

**Table 1**

| | One-dimensional conductive fibers | Thickness of first framework layer (μm) | $A_2$ (mL) | $T_2$ (min) | Zero-dimensional material | $m_0$ (mg) | One-dimensional material | $m_1$ (mg) | Two-dimensional material | $m_2$ (mg) | Thickness of second framework layer (μm) | $A_1$ (mL) | $T_1$ (min) | Thickness of three-dimensional framework (μm) | Mass ratio between one-dimensional material and two-dimensional material | Mass percent of zero-dimensional material (%) | Particle diameter of zero-dimensional material (μm) | Diameter of one-dimensional material (nm) | Length-to-diameter ratio of one-dimensional material | Porosity (%) | Thickness change rate (%) | Electrical conductivity a (S/cm) | Electrical conductivity b (S/cm) | Coulombic efficiency (%) | Number of cycles (cls) |
|---|---|---|---|---|---|---|---|---|---|---|---|---|---|---|---|---|---|---|---|---|---|---|---|---|---|
| Embodiment 1 | CNT | 5 | 20 | 30 | $SnO_2$ | 0.16 | CNT | 7 | MXene | 1 | 50 | 100 | 180 | 55 | 7:1 | 2 | 0.3 | 2 | 10000-12000 | 85 | 5 | 105 | 890 | 99.52 | 325 |
| Embodiment 2 | CNT | 5 | 20 | 30 | $SnO_2$ | 0.24 | CNT | 10.5 | MXene | 1.5 | 80 | 150 | 288 | 85 | 7:1 | 2 | 0.3 | 2.8 | 7500-12000 | 86 | 5 | 105 | 890 | 99.42 | 295 |
| Embodiment 3 | CNT | 5 | 20 | 30 | $SnO_2$ | 0.32 | CNT | 14 | MXene | 2 | 100 | 200 | 360 | 125 | 7:1 | 2 | 0.3 | 2.6 | 10000-15000 | 85 | 5 | 105 | 890 | 99.4 | 285 |
| Embodiment 4 | CNT | 5 | 20 | 30 | $SnO_2$ | 0.16 | CNT | 7 | MXene | 1 | 10 | 20 | 36 | 15 | 7:1 | 2 | 0.3 | 2.1 | 7500-10000 | 86 | 20 | 105 | 890 | 99.3 | 268 |
| Embodiment 5 | CNT | 0 | / | / | $SnO_2$ | 0.64 | CNT | 28 | MXene | 4 | 200 | 400 | 720 | 200 | 7:1 | 2 | 0.3 | 2.3 | 8500-10000 | 85.5 | 0 | 105 | 890 | 99.25 | 284 |
| Embodiment 6 | CNT | 1 | 4 | 10 | $SnO_2$ | 0.32 | CNT | 14 | MXene | 2 | 54 | 108 | 200 | 55 | 7:1 | 2 | 0.3 | 2.1 | 9500-12000 | 87 | 6 | 105 | 890 | 99.27 | 296 |
| Embodiment 7 | CNT | 3 | 12 | 18 | $SnO_2$ | 0.32 | CNT | 14 | MXene | 2 | 52 | 104 | 188 | 55 | 7:1 | 2 | 0.3 | 2.5 | 7500-10000 | 86.3 | 5 | 105 | 890 | 99.38 | 309 |
| Embodiment 8 | CNT | 10 | 40 | 60 | $SnO_2$ | 0.16 | CNT | 7 | MXene | 1 | 45 | 80 | 168 | 55 | 7:1 | 2 | 0.3 | 2.9 | 7800-10000 | 85.9 | 5 | 105 | 890 | 99.44 | 316 |
| Embodiment 9 | / | 0 | / | / | $SnO_2$ | 0.36 | CNT | 16 | MXene | 2 | 55 | 115 | 198 | 55 | 8:1 | 2 | 0.3 | 2.4 | 9000-12000 | 87.4 | 7 | 105 | 890 | 99.1 | 265 |
| Embodiment 10 | CNT | 5 | 20 | 30 | $SnO_2$ | 0.08 | CNT | 7 | MXene | 1 | 50 | 100 | 180 | 55 | 7:1 | 1 | 0.3 | 3 | 9500-11000 | 86.8 | 5 | 105 | 890 | 99.32 | 302 |
| Embodiment 11 | CNT | 5 | 20 | 30 | $SnO_2$ | 0.4 | CNT | 7 | MXene | 1 | 50 | 100 | 180 | 55 | 7:1 | 5 | 0.3 | 2.4 | 8700-11000 | 86.2 | 5 | 105 | 890 | 99.28 | 318 |
| Embodiment 12 | CNT | 5 | 20 | 30 | $SnO_2$ | 0.8 | CNT | 7 | MXene | 1 | 50 | 100 | 180 | 55 | 7:1 | 9 | 0.3 | 2.0 | 9600-12000 | 87 | 5 | 105 | 890 | 99.25 | 321 |
| Embodiment 13 | CNT | 5 | 20 | 30 | $SnO_2$ | 2.7 | CNT | 7 | MXene | 1 | 55 | 100 | 180 | 60 | 7:1 | 25 | 0.3 | 2.1 | 7500-10000 | 86.1 | 9 | 105 | 890 | 99.06 | 231 |
| Embodiment 14 | CNT | 5 | 20 | 30 | $SnO_2$ | 0.16 | CNT | 7.57 | MXene | 0.43 | 50 | 100 | 180 | 55 | 18:1 | 2 | 0.3 | 2.3 | 7900-11000 | 87.3 | 8.5 | 105 | 890 | 99.22 | 235 |
| Embodiment 15 | CNT | 5 | 20 | 30 | $SnO_2$ | 0.16 | CNT | 2 | MXene | 6 | 50 | 100 | 180 | 55 | 1:3 | 2 | 0.3 | 2.9 | 9400-12000 | 87.4 | 7.1 | 105 | 890 | 99.32 | 250 |
| Embodiment 16 | CNT | 5 | 20 | 30 | $SnO_2$ | 0.16 | CNT | 1 | MXene | 7 | 50 | 100 | 180 | 55 | 1:7 | 2 | 0.3 | 2.2 | 9200-12000 | 86.7 | 8.7 | 105 | 890 | 99.38 | 241 |
| Embodiment 17 | CNFs | 5 | 20 | 30 | $SnO_2$ | 0.16 | CNFs | 7 | MXene | 1 | 50 | 100 | 180 | 55 | 7:1 | 2 | 0.3 | 2.6 | 7500-12000 | 88 | 5 | 86 | 890 | 99.4 | 316 |
| Embodiment 18 | CNT | 5 | 20 | 30 | $SnO_2$ | 0.16 | CNT | 7 | Gr | 1 | 50 | 100 | 180 | 55 | 7:1 | 2 | 0.3 | 1.9 | 7900-11000 | 87.5 | 7 | 105 | 741 | 99.38 | 289 |
| Embodiment 19 | CNT | 5 | 20 | 30 | $SiO_2$ | 0.16 | CNT | 7 | MXene | 1 | 50 | 100 | 180 | 55 | 7:1 | 2 | 0.3 | 3.2 | 8800-12000 | 86 | 5 | 105 | 890 | 99.47 | 328 |
| Embodiment 20 | CNT | 5 | 20 | 30 | $TiO_2$ | 0.16 | CNT | 7 | MXene | 1 | 50 | 100 | 180 | 55 | 7:1 | 2 | 0.3 | 2.4 | 9500-11000 | 85.8 | 5.05 | 105 | 890 | 99.49 | 318 |
| Embodiment 21 | CNT | 5 | 20 | 30 | Ag | 0.16 | CNT | 7 | MXene | 1 | 50 | 100 | 180 | 55 | 7:1 | 2 | 0.3 | 2.2 | 7400-12000 | 85.6 | 5 | 105 | 890 | 99.45 | 321 |
| Embodiment 22 | CNT | 5 | 20 | 30 | $SnO_2$ | 0.16 | CNT | 7 | MXene | 1 | 50 | 100 | 180 | 55 | 7:1 | 2 | 0.3 | 2.2 | 7900-10000 | 60 | 6 | 105 | 890 | 99.12 | 224 |
| Embodiment 23 | CNT | 5 | 20 | 30 | $SnO_2$ | 0.16 | CNT | 7 | MXene | 1 | 50 | 100 | 180 | 55 | 7:1 | 2 | 0.3 | 2.1 | 8400-11000 | 40 | 9.5 | 105 | 890 | 99.02 | 205 |
| Embodiment 24 | CNT | 5 | 20 | 30 | $SnO_2$ | 0.16 | CNT | 7 | MXene | 1 | 50 | 100 | 180 | 55 | 7:1 | 2 | 0.3 | 2.5 | 8500-10000 | 30 | 10 | 105 | 890 | 99.01 | 212 |
| Embodiment 25 | CNT | 5 | 20 | 30 | Modified $Fe_2O_3$ | 0.16 | CNT | 7 | MXene | 1 | 50 | 100 | 180 | 55 | 7:1 | 2 | 0.3 | 2 | 10000-12000 | 85 | 5 | 105 | 890 | 99.45 | 289 |
| Comparative Embodiment 1 | / | / | / | / | / | / | CNT | 10 | / | / | 55 | 100 | 198 | 55 | / | / | / | 2.1 | 8500-11000 | 65 | 16 | 105 | / | 98.67 | 185 |
| Comparative Embodiment 2 | / | / | / | / | $SnO_2$ | 0.2 | CNT | 10 | / | / | 55 | 100 | 198 | 55 | / | 2 | 0.3 | 2.8 | 9100-12000 | 85.9 | 12 | 105 | / | 98.98 | 200 |
| Comparative Embodiment 3 | / | / | / | / | / | / | / | / | MXene | 10 | / | / | / | / | / | / | / | / | / | 90 | 14 | / | 890 | 98.43 | 165 |
| Comparative Embodiment 4 | / | / | / | / | $LiCoO_2$ | / | / | / | / | / | / | / | / | / | / | / | / | / | / | / | 20 | / | / | 97.65 | 24 |

| | One-dimensional conductive fibers | Thickness of first framework layer (μm) | $A_2$ (mL) | $T_2$ (min) | Zero-dimensional material | $m_0$ (mg) | One-dimensional material | $m_1$ (mg) | Two-dimensional material | $m_2$ (mg) | Thickness of second framework layer (μm) | $A_1$ (mL) | $T_1$ (min) | Thickness of three-dimensional framework (μm) | Mass ratio between one-dimensional material and two-dimensional material | Mass percent of zero-dimensional material (%) | Particle diameter of zero-dimensional material (μm) | Diameter of one-dimensional material (nm) | Length-to-diameter ratio of one-dimensional material | Porosity (%) | Thickness change rate (%) | Electrical conductivity a (S/cm) | Electrical conductivity b (S/cm) | Coulombic efficiency (%) | Number of cycles (cls) |
|---|---|---|---|---|---|---|---|---|---|---|---|---|---|---|---|---|---|---|---|---|---|---|---|---|---|
| Embodiment 4 | | | | | | | | | | | | | | | | | | | | | | | | | |
| Comparative Embodiment 5 | CNT | 5 | 20 | 30 | $SnO_2$ | 2.89 | CNT | 4.61 | MXene | 0.66 | 50 | 100 | 180 | 55 | 7:1 | 35 | 0.3 | 2.3 | 7900-10000 | 86 | 17 | 105 | 890 | 98.13 | 157 |
| Comparative Embodiment 6 | CNT | 5 | 20 | 30 | $SnO_2$ | 0.16 | CNT | 7.69 | MXene | 0.31 | 50 | 100 | 180 | 55 | 25:1 | 2 | 0.3 | 2.2 | 8400-10000 | 86.5 | 16.8 | 105 | 890 | 98.24 | 163 |
| Comparative Embodiment 7 | CNT | 5 | 20 | 30 | $SnO_2$ | 0.16 | CNT | 7 | MXene | 1 | 5 | 10 | 180 | 10 | 7:1 | 2 | 0.3 | 2.3 | 7900-12000 | 85.5 | 16.5 | 105 | 890 | 98.45 | 176 |
| Comparative Embodiment 8 | CNT | 5 | 20 | 30 | $SnO_2$ | 0.8 | CNT | 35 | MXene | 5 | 250 | 500 | 180 | 255 | 7:1 | 2 | 0.3 | 2.6 | 7600-10000 | 85.9 | 16.3 | 105 | 890 | 98.34 | 165 |
| Comparative Embodiment 9 | CNT | 5 | 20 | 30 | $SnO_2$ | 14.28 | CNT | 23.2 | MXene | 3.32 | 250 | 500 | 180 | 255 | 7:1 | 35 | 0.3 | 2.8 | 10500-11000 | 85.6 | 18.2 | 105 | 890 | 98.12 | 143 |
| Comparative Embodiment 10 | CNT | 5 | 20 | 30 | $SnO_2$ | 14.28 | CNT | 25.5 | MXene | 1.02 | 250 | 500 | 180 | 255 | 25:1 | 35 | 0.3 | 2.1 | 9400-11000 | 85.3 | 15.8 | 105 | 890 | 98.38 | 156 |

Note: "/" in Table 1 indicates absence of the corresponding preparation parameter or performance parameter.

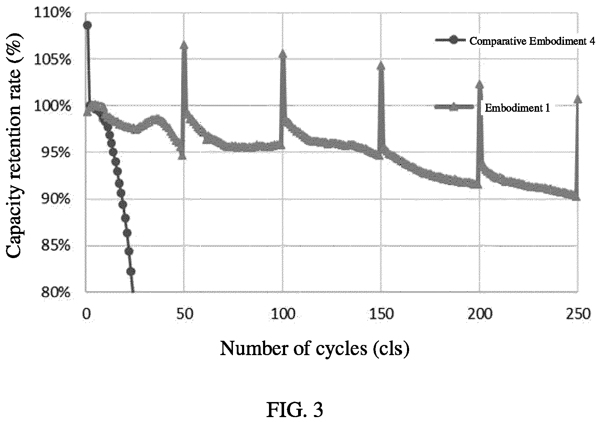

As can be seen from Embodiments 1 to 25 and Comparative Embodiments 1 to 10, when the three-dimensional framework prepared in an embodiment of this application is applied to a lithium metal battery, the Coulombic efficiency is higher, and a larger number of cycles is achieved. Therefore, the lithium metal battery in an embodiment of this application achieves a higher level of Coulombic efficiency and cycle performance. In addition, the thickness change rate of the three-dimensional framework is relatively low, thereby improving the expansion resistance of the lithium metal battery. Specifically, FIG. 2 is a scanning electron microscope (SEM) image of a three-dimensional framework according to Embodiment 1. As can be seen from the drawing, the three-dimensional framework assumes a three-dimensional structure, and there are pores in the three-dimensional framework. FIG. 3 shows a capacity fading curve of a lithium metal battery according to Embodiment 1 and Comparative Embodiment 4. As can be seen from the drawing, the capacity retention rate of the lithium metal battery in Comparative Embodiment 4 drops to 80% at the end of 24 cycles. In contrast, the capacity retention rate of the lithium metal battery in Embodiment 1 basically remains at 90% or above at the end of 250 cycles. The test results show that the lithium metal battery according to this application is superior in cycle performance.

As can be seen from Embodiment 1 and Comparative Embodiments 1 to 4, the lithium metal battery exhibits a higher level of Coulombic efficiency and cycle performance when the second framework layer includes the zero-dimensional material, the one-dimensional material, and the two-dimensional material concurrently.

As can be seen from Embodiment 1, Embodiments 10 to 13, and Comparative Embodiment 5, the lithium metal battery exhibits a higher level of Coulombic efficiency and cycle performance when the mass percent of the zero-dimensional material falls within the range specified herein.

As can be seen from Embodiment 1, Embodiments 14 to 16, and Comparative Embodiment 6, the lithium metal battery exhibits a higher level of Coulombic efficiency and cycle performance when the mass ratio between the one-dimensional material and the two-dimensional material falls within the range specified herein.

As can be seen from Embodiment 1 and Comparative Embodiments 7 and 8, the lithium metal battery exhibits a higher level of Coulombic efficiency and cycle performance when the thicknesses of the second framework layer and the three-dimensional framework fall within the ranges specified herein.

As can be seen from Embodiment 1 and Comparative Embodiments 9 and 10, the lithium metal battery exhibits a higher level of Coulombic efficiency and cycle performance when the thickness of the three-dimensional framework, the thickness of the first framework layer, the thickness of the second framework layer, the mass percent of the zero-dimensional material, and the mass ratio between the one-dimensional material and the two-dimensional material all fall within the ranges specified herein. The thickness of the first framework layer usually affects the performance of the lithium metal battery. As can be seen from Embodiment 1 and Embodiments 6 to 9, the lithium metal battery exhibits relatively high Coulombic efficiency and good cycle performance when the thickness of the first framework layer falls within the range specified herein.

The type of the one-dimensional conductive fibers in the first framework layer and the types of the one-, two-, and zero-dimensional materials in the second framework layer usually affect the performance of the lithium-metal battery. As can be seen in Embodiment 1, Embodiments 17 to 21, and Embodiment 25, the lithium metal battery exhibits relatively high Coulombic efficiency and good cycle performance when the type of the one-dimensional conductive fibers in the first framework layer and the types of the one-, two-, and zero-dimensional materials in the second framework layer fall within the ranges specified herein. As can be seen from Embodiments 1 to 25, when the thickness of the three-dimensional framework, the thickness of the first framework layer, the thickness of the second framework layer, the mass percent of the zero-dimensional material, and the mass ratio between the one-dimensional material and the two-dimensional material all fall within the ranges specified herein, the three-dimensional framework exhibits a relatively high porosity and a relatively low thickness change rate, and the one-dimensional material and the two-dimensional material exhibit a relatively high electrical conductivity. Therefore, the lithium metal battery exhibits relatively high Coulombic efficiency and good cycle performance. The particle diameter of the zero-dimensional material as well as the diameter and the length-to-diameter ratio of the one-dimensional material usually affect the performance of the lithium metal battery. As can be seen from Embodiments 1 to 25, the lithium metal battery exhibits relatively high Coulombic efficiency and good cycle performance when the particle diameter of the zero-dimensional material as well as the diameter and the length-to-diameter ratio of the one-dimensional material fall within the ranges specified herein.

It is hereby noted that the relational terms herein such as first and second are used only to differentiate one entity or operation from another, but do not require or imply any actual relationship or sequence between the entities or operations. Moreover, the terms "include", "comprise", and any variations thereof are intended to cover a non-exclusive inclusion relationship by which a process, method, object, or device that includes or comprises a series of elements not only includes such elements, but also includes other elements not expressly specified or also includes inherent elements of the process, method, object, or device.

Different embodiments of this application are described in a correlative manner. For the same or similar part in one embodiment, reference may be made to another embodiment. Each embodiment focuses on differences from other embodiments.

What is described above is merely preferred embodiments of this application, but not intended to limit the protection scope of this application. Any modifications, equivalent replacements, improvements, and the like made without departing from the spirit and principles of this application still fall within the protection scope of this application.

**Claims**

1. A secondary battery, comprising: a negative electrode plate and a separator; wherein the negative electrode plate comprises a three-dimensional framework; the three-dimensional framework comprises a first framework layer and a second framework layer; the first framework layer comprises one-dimensional conductive fibers; the second framework layer comprises a zero-dimensional material, a one-dimensional material, and a two-dimensional material; and the zero-dimensional material is a lithiophilic material; **characterized in that**,

   a thickness of the three-dimensional framework is 10 $\mu$m to 200 $\mu$m, a thickness of the first framework layer is no greater than 10 $\mu$m, and a thickness of the second framework layer is 10 $\mu$m to 200 $\mu$m; and
   based on a mass of the second framework layer, a mass percent of the zero-dimensional material is 1% to 30%, and a mass ratio between the one-dimensional material and the two-dimensional material is 1: 7 to 20: 1.

2. The secondary battery according to claim 1, **characterized in that**, the negative electrode plate comprises a metallic lithium layer, the second framework layer is located between the first framework layer and the metallic lithium layer, and a thickness of the metallic lithium layer is 1 $\mu$m to 100 $\mu$m.

3. The secondary battery according to claim 2, **characterized in that**, the thickness of the metallic lithium layer is 5 $\mu$m to 50 $\mu$m.

4. The secondary battery according to any one of claims 1 to 3, **characterized in that**, a thickness of the three-dimensional framework is 30 $\mu$m to 180 $\mu$m, and the thickness of the second framework layer is 30 $\mu$m to 80 $\mu$m.

5. The secondary battery according to any one of claims 1 to 4, **characterized in that**, the mass percent of the zero-dimensional material is 1% to 10%.

6. The secondary battery according to any one of claims 1 to 5, **characterized in that**, a particle diameter of the zero-dimensional material is 0.1 $\mu$m to 5 $\mu$m.

7. The secondary battery according to any one of claims 1 to 6, **characterized in that**, a diameter of the one-dimensional material is 1 nm to 2000 nm, and a length-to-diameter ratio of the one-dimensional material is 0.1 to 20000.

8. The secondary battery according to any one of claims 1 to 7, satisfying at least one of the following characteristics:

   e) a particle diameter of the zero-dimensional material is 0.1 $\mu$m to 1 $\mu$m;
   f) a diameter of the one-dimensional material is 1 nm to 300 nm, and a length-to-diameter ratio of the one-dimensional material is 0.67 to 20000; or
   g) a diameter of the one-dimensional material is 1 nm to 50 nm, and a length-to-diameter ratio of the one-dimensional material is 5000 to 20000.

9. The secondary battery according to any one of claims 1 to 8, **characterized in that**, the two-dimensional material comprises titanium, carbon, and a surface group, and the surface group comprises at least one of -F, -O, or -OH.

10. The secondary battery according to any one of claims 1 to 9, **characterized in that**, an electrical conductivity a of the one-dimensional material satisfies: a $\geq$ 1 $\times$ 10$^{-6}$ S/cm, and an electrical conductivity b of the two-dimensional material satisfies: b $\geq$ 2 S/cm, and b > a.

11. The secondary battery according to any one of claims 1 to 10, **characterized in that**, the one-dimensional conductive fibers comprise at least one of multi-walled carbon nanotubes, carbon nanofibers, a silver wire, or a nickel wire; the zero-dimensional material comprises at least one of a metal material, an oxide, a nitride, a sulfide, or a carbide; the metal material comprises at least one of Ag, Au, Zn, or an alloy thereof; the oxide comprises at least one of $TiO_2$, $SiO_2$, ZnO, $SnO_2$, $Co_3O_4$, or $Fe_2O_3$; the nitride comprises $Mo_2N_3$ and/or $Fe_6N_3$; the sulfide comprises $MoS_2$ and/or $SnS_2$; the carbide comprises FeC; the one-dimensional material comprises at least one of multi-walled carbon nanotubes, carbon nanofibers, a silver wire, or a nickel wire; and the two-dimensional material comprises MXene and/or graphene.

12. The secondary battery according to claim 11, wherein a surface of the zero-dimensional material contains a wetting group, wherein the wetting group comprises at least one of -OH, -COOR, -COOH, -NH$_2$, or -SO$_3$H, and R in -COOR is selected from methyl, ethyl, propyl, vinyl, or ethynyl.

13. The secondary battery according to any one of claims 1 to 12, **characterized in that**, a porosity of the three-dimensional framework is greater than or equal to 80%.

14. The secondary battery according to any one of claims 1 to 13, **characterized in that**, a thickness change rate of the three-dimensional framework is less than 10% when lithium metal is deposited in the three-dimensional framework at a concentration of 5 mAh/cm$^2$.

15. An electronic device, comprising the secondary battery according to any one of claims 1 to 14.

FIG. 1

FIG. 2

FIG. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU YUCHENG ET AL: "Lamellar-structured anodes based on lithiophilic gradient enable dendrite-free lithium metal batteries with high capacity loading and fast-charging capability", CHEMICAL ENGENEERING JOURNAL, ELSEVIER, AMSTERDAM, NL, vol. 451, 138570, 10 August 2022 (2022-08-10), pages 1-9, XP087193469, ISSN: 1385-8947, DOI: 10.1016/J.CEJ.2022.138570 [retrieved on 2022-08-10] | 1,4,5, 7-10,14, 15 | INV. H01M4/134 H01M4/38 H01M4/62 H01M10/052 H01M4/1395 ADD. H01M4/02 |
| Y | * abstract * * page 2 - page 3; figures 1-5 * ----- | 2,3,11 | |
| Y | WO 2022/197068 A1 (VITZROCELL CO LTD [KR]; MAKESENS INC [CA]) 22 September 2022 (2022-09-22) * abstract * * paragraph [0203] - paragraph [0258]; claims 1-27; figures 1-12b * * paragraph [0163] - paragraph [0171] * ----- | 2,3,11 | |
| A | CN 107 732 204 B (NINGBO INST MATERIALS TECH & ENG CAS) 7 July 2020 (2020-07-07) * abstract * * paragraph [0073] - paragraph [0081]; claims 1-8 * ----- | 1-15 | TECHNICAL FIELDS SEARCHED (IPC) H01M |
| A | CN 114 335 540 B (BEIJING YILAN NEW ENERGY SCIENCE AND TECH CO LTD) 21 March 2023 (2023-03-21) * abstract * * paragraph [0103] - paragraph [0105]; claims 1-14 * ----- -/-- | 1-15 | |

The present search report has been drawn up for all claims

| Place of search | Date of completion of the search | Examiner |
|---|---|---|
| The Hague | 19 July 2024 | Ramos Alonso, A |

EPO FORM 1503 03.82 (P04C01)

Europäisches
Patentamt

European
Patent Office

Office européen
des brevets

## EUROPEAN SEARCH REPORT

Application Number

EP 24 17 2114

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHOU JIAHUI ET AL: "Lithium-metal host anodes with top-to-bottom lithiophilic gradients for prolonged cycling of rechargeable lithium batteries", JOURNAL OF POWER SOURCES, ELSEVIER, AMSTERDAM, NL, vol. 495, 229773, 26 March 2021 (2021-03-26), pages 1-9, XP086534298, ISSN: 0378-7753, DOI: 10.1016/J.JPOWSOUR.2021.229773 [retrieved on 2021-03-26] * abstract * * page 2 - page 3 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 19 July 2024 | Ramos Alonso, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 17 2114

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | Publication date | Patent family member(s) | Publication date |
|---|---|---|---|
| WO 2022197068 A1 | 22-09-2022 | CA 3210805 A1<br>EP 4309224 A1<br>JP 2024512518 A<br>US 2024145661 A1<br>WO 2022197068 A1 | 22-09-2022<br>24-01-2024<br>19-03-2024<br>02-05-2024<br>22-09-2022 |
| CN 107732204 B | 07-07-2020 | NONE | |
| CN 114335540 B | 21-03-2023 | NONE | |

EPO FORM P0459

For more details about this annex : see Official Journal of the European Patent Office, No. 12/82

**EP 4 456 181 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1100789 A